# EUROPEAN PATENT SPECIFICATION

(11) **EP 1 572 816 B1**
(45) Date of publication and mention of the grant of the patent: **08.07.2009**
(21) Application number: 03812376.6
(22) Date of filing: 14.04.2003
(51) Int. Cl.: C09D 5/18

(54) **FLAME RETARDANT COATING COMPOSITION AND METHOD OF PREPARING THE SAME**
FLAMMWIDRIGE BESCHICHTUNGSZUSAMMENSETZUNGUND VERFAHREN ZU DEREN HERSTELLUNG
COMPOSITION DE REVETEMENT IGNIFUGE ET PROCEDE POUR LA PREPARER

(30) Priority: 29.11.2002 KR 2002075448
(43) Date of publication of application: 14.09.2005
(73) Proprietor: Yujintech21 Co., Ltd., 336-885 Chungcheongnam-do (KR); Ha, Jin-Wook, Chungcheongnam-do 330-092 (KR)
(72) Inventor: HA, Jin-Wook, 503-501 WolbongHyundai Apt., 330-092 Chungcheongnam-do (KR); HA, Jin-Heon, Gangnam-gu, 135-080 Seoul (KR); HONG, Jee-Nyu, Suwon-si, 442-374 Gyeonggi-do (KR); CHO, Seung-Hyun, 435-010 Gyeonggi-do (KR)
(74) Representative: Eisenführ, Günther
(86) International application number: PCT/KR2003/000757
(87) International publication number: WO 2004/050777

(56) References cited:
- WO-A-01/72887
- JP-A- 56 070 060
- JP-A- 59 102 966
- KR-A- 2001 016 758
- US-A- 4 532 287

## Description

### Technical Field

The present invention relates to flame retardant coating compositions, and methods of preparing a flame retardant product and a substrate coated with said coating composition.

### Background Art

As interior finishes required for building construction, there are used various flammable materials such as wood panels, styrofoam, synthetic resin moldings and the like, all of which suffer from drawbacks of rapid ignition in a fire and generation of large quantities of harmful gases. Thus, such flammable interior finishes directly contribute to the rapid spread of conflagrations. In particular, since a thermoplastic resin is a flammable organic material comprising oxygen, hydrogen, carbon, etc. in a chemical structure thereof, it is highly combustible. Further, upon combustion of the thermoplastic resin, smoke containing harmful gases is emitted in large amounts, thus secondarily causing loss of life.

In recent years, research into fire resistance has been performed to prevent conflagrations from occurring, and a variety of flame retarding materials have been developed for suppression flames in practical applications, for example, construction materials, electronic and electric products, and electrical cables.

For instance, in U.S. Patent No. 5,326,800, there is disclosed a method of preparing a flame-resistant material by use of a glass fiber containing polycarbonate resin incorporated with an alkali metal and an ammonium salt. In addition, Korean Patent Publication No. 1999-0036727 discloses a fire resistant resin composition containing magnesium hydroxide particles and aluminum hydroxide particles. However, the above patents suffer from the drawback of a complicated preparation process because the fire retardant material is separately added to the resin composition to yield a fire resistant product.

In order to prepare a fire resistant product by directly coating a flame retardant coating composition on a desired subject without requiring such a complicated preparation process, Korean Patent Publication No. 2002-0003925 discloses a flame retardant coating material for use in construction comprising silicon oxide, aluminum oxide, iron oxide, calcium oxide, magnesium oxide and sodium oxide.

Additionally, in U.S. Patent No. 4,532,287, there is disclosed a method of providing fire resistance to a fiber or a resin plate made of an organic material by coating a fire resistant composition including halogenated compound on a surface of the fiber or the resin plate.

The above method, however, is disadvantageous in terms of use of environmentally harmful halogenated compound and generation of large amounts of environmental pollutants during cycles of production, use and disposal of the compound.

Although a method of using a metal hydroxide such as aluminum hydroxide, instead of the halogenated compound, for solving the problems, is described in U.S. Patent No. 5,500,480, use of large amounts of the metal hydroxide results in decreasing mechanical properties and heat resistance of end products, and otherwise negatively affecting the flame retardant finish.

Conventional fire resistant products have problems such as complicated preparation processes due to preparation of a fire retarding agent with the aid of a fire resistant compound, difficulty in providing fire retardancy to the products, and low flame retardancy.

WO 01/72887 describes flame retarding coating compositions.

### Disclosure Of The Invention

Therefore, it is an object of the present invention to solve the problems encountered in the prior art and to provide a flame retardant coating composition comprising a water-soluble resin, a urethane based resin or an acryl based resin in mixture with a flame retarding agent, a flame retarding aid, a diluting agent and an additive.

It is another obj ect of the present invention to provide a method of preparing a flame retardant product by coating a flame retardant coating composition onto a desired substrate.

### Best Modes For Carrying Out The Invention

The present invention pertains to a flame retarding coating composition comprising 10-50 wt% of a water-soluble resin, 10-30 wt% of a phosphorus-based flame retarding agent, 8-20 wt% of a flame retarding aid, 30-45 wt% of a diluting agent and 0.1-0.5 wt% of an additive, based on the whole wt% of the coating composition.

In addition, the present invention pertains to a method of preparing a flame retardant product as defined in claim 6, generally comprising the steps of homogeneously a water-soluble resin, with 10-30 wt% of phorphorus-based flame retarding agent, 8-20 wt% of a flame retarding aid, 30-45 wt% of a diluting agent and 0.1-0.5 wt% of an additive to give a flame retardant coating composition; coating the flame retardant coating composition on a substrate; and thermally treating the fire retarding coating composition-coated substrate at a temperature ranging form 80 to 150°C through heating and drying.

Herein, "flame retardant" means fire resistant or flame resistant.

The water-soluble resin suitable for use in the present invention, referring to synthetic resins dissolvable or dispersible in water, is typically represented by resol type phenolic resin, urea resin precondensate, melamine resin precondensate, polyvinylalcohol, polyethylene oxide, alkyd resin, acrylic resin, urethane resin, epoxyester resin, etc. As the usable water-soluble resin, there is at least one synthetic resin selected from the group consisting of alkyd resin, acrylic resin, urethane resin, epoxyester resin and mixtures thereof. In particular, the synthetic resin having low polymerization degree is preferable, and is used in an amount of 10-50 wt%, and preferably 15-30 wt%, based on the whole wt% of the coating composition.

The acryl based resin used in the present invention generally refers to acrylics or polyacrylate acrylic resins. This resin is used in the amount of 10-50 wt%, and preferably 15-30 wt%, based on the whole wt% of the coating composition, and is exemplified by polyalkylmethacrylate or alkylmethacrylate-alkylacrylate copolymer. In the alkylmethacrylate-alkylacrylate copolymer, the alkylmethacrylate unit is contained in the amount of about 50-99 wt%, and the alkylacrylate unit is contained in the amount of about 1-50 wt%.

Alkyl methacrylate includes, for example, methylmethacrylate. Alkyl acrylate having an alkyl group of 2-10 carbons is exemplified by ethylacrylate, n-propylacrylate, isopropylacrylate, n-butylacrylate, isobutylacrylate, hexylacrylate, octylacrylate, etc.

The urethane based resin of the present invention is used in the amount of 10-50 wt%, and preferably 15-30 wt%, based on the whole wt% of the coating composition, and includes isocyanates and polyols. Examples of the isocyanate include TDI (toluene diisocyanate), MDI (diphenylmethane diisocyanate), HDI (1,6-hexamethylene diisocyanate), PPDI (p-phenylene diisocyanate), HMDI (4,4-dicyclohexyl methane diisocyanate), modified isocyanate, etc. As the polyol having two or more hydroxide groups (-OH), polyester polyol, PHD polyol, amine modified polyol, silicon modified polyol, urethane modified polyol and the like may be used.

The flame retarding agent of the present invention is used in the amount of 10-30 wt%, and preferably 12-20 wt%, based on the whole wt% of the coating composition. The flame retarding agent is a, phosphorus-based flame retarding agent.

In the present invention, the flame retarding aid itself is not flame proof but acts to further increase a fireproofing effect when being used together with the flame retarding agent, compared to use of only the flame retarding agent. Thus, even though a small amount of the aid is used, the fireproofing effect can be sufficiently exhibited. In such a case, the flame retarding aid is used in the amount of 8-20 wt%, and preferably 10-15 wt%, based on the whole wt% of the coating composition. Examples of the fire retarding aid include antimony trioxide, antimony pentoxide, zinc borate, carbon black, boric acid, paraffin wax, etc. In particular, antimony trioxide or zinc borate is preferably used.

Since the above flame retarding aid functions to improve the fireproofing effect when being used together with the flame retarding agent, the flame retarding aid is used in as small as possible an amount. Generally, the aid is used in the amount of 1/3-1/2 wt% of the flame retarding agent.

The diluting agent of the present invention is selected in consideration of volatility, solubility and compatibility with the resin, and is exemplified by methylethylketone, toluene, isopropanol, ethylalcohol and methylalcohol.

The diluting agent is used in the amount of 30-45 wt% based on the whole wt% of the coating composition. If the diluting agent is used in the amount of less than 30 wt%, the coated layer becomes thick or the coated surface is uneven upon coating the fire retardant coating composition on the substrate. Meanwhile, if the amount exceeds 45 wt%, the fireproofing effect is decreased.

The additive used in the present invention functions to ensure that surface leveling of the flame retardant coating composition is good, thereby enabling an easy a coating process, and as well, allows the composition to be cleanly coated onto the surface of the substrate. Consequently, use of the additive leads to easy dispersion of the composition and readily storable and usable products.

Good surface leveling means that surface defects frequently generated upon coating of the coating composition on a subject surface are prevented to exhibit a good external appearance of the coated layer, and to have a desired protective function.

The additive is selected from the group consisting of acrylate copolymer, alkyl ammonium salt of acidic polymer, unsaturated polyamine amide salt, polar acid ester, carboxylic acid ester, polyether modified dimethylpolysiloxane, polyester modified dimethylpolysiloxane, polymethylalkylsiloxane, alkyl modified polymethylalkylsiloxane, polyacrylate copolymer, etc.

The additive responsible for maintaining surface wetness is used in the amount of 0.1-0.5 wt%, and preferably 0.1-0.3 wt%, based on the whole wt% of the flame retardant coating composition. A dispersant as the additive is used in the amount of 1.0-1.5 wt% or 5-6 wt% based on solid content, and may be changed depending on the used solid content. In the present invention, the amount ranges from 1.0 to 1.2 wt%.

The flame retardant coating composition composed of the above components is coated onto the substrate through a series of procedures of producing the flame retardant coating composition, coating the coating composition onto the substrate and thermally treating the coated substrate at 80-150°C through heating and drying.

Herein, the term "substrate" means a solid generating harmful gases upon combustion, and is represented by plastics including foamed polystyrene, polyethylene, polyurethane, polyvinyl chloride used for construction materials, such as packaging materials, wall papers, flooring materials, wall materials or finishing materials, buoyant materials, decorative materials, insulating materials and daily necessities. Further, housings or electrical cables of electronic and electric products containing material generating harmful gases upon combustion are also represented. Any substrate may be used as long as it can be subjected to a coating treatment, and is coated with the flame retardant coating composition to have flame retardancy. As necessary, the flame retardant coating composition maybe added with pigments for providing color.

The step of preparing the flame retardant coating composition means that the water-soluble resin, the urethane based resin or the acryl based resin is mixed with the flame retarding agent, the flame retarding aid, the diluting agent and the additive, to produce a homogeneous composition.

A better understanding of the present invention may be obtained in light of the following examples (not according to the invention).

### EXAMPLE 1

6g of A-9540 [Aekyung Chemical, Korea] as an acryl based resin and 5g of MEK [Duksan Chemical Co., Korea] as a diluting agent were mixed with sufficient stirring, to which 5g of TBBA [Nippon Chemical, Japan] as a flame retarding agent was gadded with stirring.

Then, a mixture of 0.06g of BYK-306 as a surface wetting additive [BYK, Germany] and 5g of MEK [Duksan Chemical Co., Korean] was added dropwise to the reaction mixture with stirring.

0.45g of Disperbyk-161 [BYK, Germany] as a dispersant was diluted with a diluting agent to make a 15% solution, and slowly added to the reaction mixture, after which 3g of Sb₂O₃ [Ilsung Antimony Co. Ltd., Korea] as a flame retarding aid was further added to the mixture, to yield a flame retardant coating composition.

### EXAMPLE 2

A flame retardant coating composition was prepared in the same manner as in the above Example 1, except that 4g of Sb₂O₃ [Ilsung Antimony Co. Ltd., Korea] was used as a flame retarding aid, instead of 3g of Sb₂O₃ [Ilsung Antimony Co. Ltd., Korea].

### EXAMPLE 3

A flame retardant coating composition was prepared in the same manner as in the above Example 1, except that A-881 [Aekyung Chemical, Korea] was used as an acryl based resin, instead of A-9540 [Aekyung Chemical, Korea].

### EXAMPLE 4

6g of 12-406 [Aekyung Chemical, Korea] as a urethane based resin was mixed with 5g of MEK [Duksan Chemical Co., Korea] as a diluting agent with sufficient stirring, to which 5 g of TBBA [Nippon Chemical, Japan] was added as a flame retarding agent.

Thereafter, a mixture of 5g of BYK-306 [BYK, Germany] as a surface wetting additive and 5g of MEK [Duksan Chemical Co., Korea] was added dropwise to the reaction mixture with stirring.

0.45g of Disperbyk-161 [BYK, Germany] as a dispersant was diluted with a diluting agent to make a 15% solution and slowly added to the reaction mixture, to which 3g of Sb₂O₃ [Ilsung Antimony Co. Ltd., Korea] was added as a flame retarding aid, to prepare a flame retardant coating composition.

### EXAMPLE 5

A flame retardant coating composition was prepared in the same manner as in the above Example 4, except that 4g of Sb₂O₃ [Ilsung Antimony Co. Ltd., Korea] was used as a flame retarding aid, instead of 3g or Sb₂O₃ [Ilsung Antimony Co. Ltd., Korea].

### EXAMPLE 6

A flame retardant coating composition was prepared in the same manner as in the above Example 4, except that Mg(OH)₂ [Kyowa Chemical, Japan] was used as a flame retarding agent, instead of TBBA [Nippon Chemical, Korea].

### EXAMPLE 7

A flame retardant coating composition was prepared in the same manner as in the above Example 4, except that zinc borate [BORAX, USA] was used as a flame retarding aid, instead of Sb₂O₃ [Ilsung Antimony Co. Ltd., Korea].

### EXAMPLE 8

A flame retardant coating composition was prepared in the same manner as in the above Example 4, except that 1.5g of zinc borate [BORAX, USA] and 1.5g of Sb₂O₃ [Ilsung Antimony Co. Ltd., Korea] were used together as a flame retarding aid, instead of Sb₂O₃ [Ilsung Antimony Co. Ltd., Korea].

### EXAMPLE 9

The flame retardant coating composition prepared in the above Example 1 was dip coated onto a PE electrical cable at a thickness of 20-30µm, and thermally cured at 120°C for 2 min.

### EXAMPLE 10

The flame retardant coating composition prepared in the above Example 4 was dip coated onto a PE electrical cable at a thickness of 20-30µm, and thermally cured at 120°C for 2 min.

### EXAMPLE 11

The flame retardant coating composition prepared in the above Example 6 was dip coated onto a PE electrical cable at a thickness of 20-30µm, and thermally cured at 120°C for 2 min.

### EXAMPLE 12

The flame retardant coating composition prepared in the above Example 7 was dip coated onto a PE electrical cable at a thickness of 20-30µm, and thermally cured at 120°C for 2 min.

### EXAMPLE 13

The flame retardant coating composition prepared in the above Example 1 was roll coated onto a PVC film at a thickness of 10-30µm, and thermally cured at 120°C for 2 min.

### EXAMPLE 14

The flame retardant coating composition prepared in the above Example 4 was roll coated onto a PVC film at a thickness of 10-30µm, and thermally cured at 120°C for 2 min.

### EXAMPLE 15

The flame retardant coating composition prepared in the above Example 6 was roll coated onto a PVC film at a thickness of 10-30µm, and thermally cured at 120°C for 2 min.

### EXAMPLE 16

The flame retardant coating composition prepared in the above Example 7 was roll coated onto a PVC film at a thickness of 10-30µm, and thermally cured at 120°C for 2 min.

### EXPERIMENTAL TEST

In order to investigate physical properties of the coated flame retardant coating composition, surface properties, bleeding upon combustion and fire resistance were tested.

The flame test for the electrical cables was carried out on the basis of UL-1581 (VW-1), and for the PVC films or the plastic plates, was performed by a 45° microburner method.

Each cable coated with the coating compositions prepared in the above Examples 1 through 8 was subjected to UL-1581 (VW-1). The results are shown in Table 1, below.

**TABLE 1**

| Ex. No. | Adhesion | Flexibility | Bleeding | UL-1581(VW-1) |
|---|---|---|---|---|
| 1 | × | × | No | Pass |
| 2 | × | × | No | Pass |
| 3 | × | × | No | Pass |
| 4 | ○ | ○ | No | Pass |
| 5 | ○ | ○ | No | Pass |
| 6 | ○ | ○ | No | Pass |
| 7 | ○ | ○ | No | Pass |
| 8 | ○ | ○ | No | Pass |
| 9 | ○ | ○ | No | Pass |

| | | | | |
|---|---|---|---|---|
| Note: [x: poor, ○: good] | | | | |

The above Table 1 shows fire resistance and surface properties depending on the content of the used flame retarding agent, tested according to a fire resistance evaluating method of an XLPE cable used for electric power cables. From the results, it can be seen that the coating composition of the present invention exhibits no bleeding upon combustion, and passed UL-1581 (VW-1) test.

On the other hand, according to the 45° microburner method, each of the coating compositions prepared in the above Examples 9 through 16 was coated on a PVC film at a thickness of 30µm using a bar coater of No.#12, which was then cut to a size of width 35cm and length 25cm, to form specimens. Three specimens were placed into a burner KUKDONG Fire Prevention CO. on the basis of the 45° microburner method. According to the same method as performed by Korea Fire Equipment Inspection Corporation, the following properties were evaluated.

The results are given in Table 2, below.

**TABLE 2**

| Ex.No. | Adhesion | Hardness | Bleeding | 45° Microburner Method |
|---|---|---|---|---|
| 9 | 100/100 | - | No | Pass |
| 10 | 100/100 | - | No | Pass |
| 11 | 100/100 | - | No | Pass |
| 12 | 100/100 | - | No | Pass |
| 13 | 100/100 | - | No | Pass |
| 14 | 100/100 | - | No | Pass |
| 15 | 100/100 | - | No | Pass |
| 16 | 100/100 | - | No | Pass |

As shown in the above Table 2, the composition of the present invention is excellent in adhesion, and exhibits no bleeding with passing the 45° microburner method.

The fire retardant certificate for the flame retardant coating composition of the present invention was obtained from the Korea Fire Equipment Inspection Corporation.

### INDUSTRIAL APPLICABILITY

As described above, the flame retardant coating composition of the present invention, which comprises a water-soluble resin, a urethane based resin or an acryl based resin in mixture with a flame retarding agent, a flame retarding aid, a diluting agent and an additive, is coated onto a substrate generating harmful gases upon combustion, whereby combustion is retarded in a fire due to the nonflammable materials contained in the coated layer. As well, harmful gases are minimally generated and a period of time for initially suppressing a fire can be ensured, thus increasing safety.

In addition, the inventive coating composition is in liquid phase and thus can be coated on any substrate to provide a fireproof property to the substrate, thereby further increasing use of the flame retardant finish compared to conventional flame retarding agents of solid phase.

The present invention has been described in an illustrative manner, and it is to be understood that the terminology used is intended to be in the nature of description rather than of limitation. Many modifications and variations of the present invention are possible in light of the above teachings. Therefore, it is to be understood that within the scope of the appended claims, the invention may be practiced otherwise than as specifically described.

## Claims

1. A flame retardant coating composition, comprising 10-50 wt% of a water-soluble resin, 10-30 wt% of a phosphorus-based flame retarding agent, 8-20 wt% of a flame retarding aid, 30-45 wt% of a diluting agent, and 0.1-0.5 wt% of an additive, based on the whole wt% of the coating composition.

2. The coating composition as defined in claim 1, wherein the water-soluble resin comprises at least one synthetic resin selected from the group consisting of alkyd resin, acrylic resin, urethane resin, epoxyester resin or mixtures thereof.

3. The coating composition as defined in claim 2, wherein the acryl based resin comprises polyalkylmethacrylate, alkylmethacrylate-alkylacrylate copolymer or mixtures thereof.

4. The coating composition as defined in claim 2, wherein the urethane based resin comprises isocyanates, polyols or mixtures thereof.

5. The coating composition as defined in claim 1, wherein the flame retarding aid comprises antimony trioxide, antimony pentoxide, zinc borate, carbon black, boric acid, paraffin wax or mixtures thereof.

6. A method of preparing a flame retardant product comprising the following steps of coating the flame retardant coating composition of any one of claims 1 to 5 on a substrate; and thermally treating the coated substrate at a temperature ranging from 80 to 150°C through heating and drying.

7. A substrate coated with the flame retardant coating composition of any one of claims 1 to 5.

## Patentansprüche

1. Flammenhemmer-Beschichtungszusammensetzung, umfassend 10 bis 50 Gew.-% an wasserlöslichem Harz, 10 bis 30 Gew.-% an phosphorbasiertem Flammenhemmmittel, 8 bis 20 Gew.-% an Flammenhemm-Hilfsstoff, 30 bis 45 Gew.-% an Lösungsmittel und 0,1 bis 0,5 Gew.-% an Additiv, bezogen auf die gesamte Beschichtungszusammensetzung.

2. Beschichtungszusammensetzung wie definiert in Anspruch 1, wobei das wasserlösliche Harz umfasst: zumindest ein synthetisches Harz ausgewählt aus der Gruppe bestehend aus Alkydharz, Acrylharz, Urethanharz, Epoxyesterharz oder Mischungen dieser.

3. Beschichtungszusammensetzung wie definiert in Anspruch 2, wobei das Acryl-basierte Harz umfasst: Polyalkylmethacrylat, Alkylmethacrylat-Alkylacrylat Copolymer oder Mischungen dieser.

4. Beschichtungszusammensetzung wie definiert in Anspruch 2, wobei das Urethan-basierte Harz umfasst: Isocyanate, Polyole oder Mischungen dieser.

5. Beschichtungszusammensetzung wie definiert in Anspruch 1, wobei der Flammenhemm-Hilfsstoff umfasst: Antimontrioxid, Antimonpentoxid, Zinkborat, Carbon Black, Borsäure, Paraffinwachs oder Mischungen dieser.

6. Verfahren zum Herstellen eines Flammenhemm-Produkts, umfassend die folgenden Schritte des Beschichtens der Flammenhemmer-Beschichtungszusammensetzung gemäß einem der Ansprüche 1 bis 5 auf ein Substrat; und thermisches Behandeln des beschichteten Substrats bei einer Temperatur von 80 bis 150°C durch Erhitzen und Trocknen.

7. Substrat beschichtet mit der Flammenhemmer-Beschichtungszusammensetzung nach einem der Ansprüche 1 bis 5.

## Revendications

1. Composition de revêtement ignifugeant, comprenant 10 à 50 % en poids d'une résine hydrosoluble, 10 à 30 % en poids d'un agent ignifugeant à base de phosphore, 8 à 20 % en poids d'un agent ignifugeant, 30 à 45 % en poids d'un agent de dilution, et 0,1 à 0,5 % en poids d'un additif, sur la base du pourcentage en poids total de la composition de revêtement.

2. Composition de revêtement telle que définie dans la revendication 1, dans laquelle la résine hydrosoluble comprend au moins une résine synthétique choisie dans le groupe constitué par une résine alkyde, une résine acrylique, une résine uréthanique, un ester de résine époxyde ou des mélanges de ceux-ci.

3. Composition de revêtement telle que définie dans la revendication 2, dans laquelle la résine à base de résine acrylique comprend un polyalkylméthacrylate, un copolymère de méthacrylate d'alkyle - acrylate d'alkyle ou des mélanges de ceux-ci.

4. Composition de revêtement telle que définie dans la revendication 2, dans laquelle la résine à base d'uréthane comprend des isocyanates, des polyols ou des mélanges de ceux-ci.

5. Composition de revêtement telle que définie dans la revendication 1, dans laquelle l'agent ignifugeant comprend du trioxyde d'antimoine, du pentoxyde d'antimoine, du borate de zinc, du noir de carbone, de l'acide ortho borique, de la paraffine ou des mélanges de ceux-ci.

6. Procédé de préparation d'un produit ignifugeant comprenant les étapes suivantes consistant à revêtir la composition de revêtement ignifugeant selon l'une quelconque des revendications 1 à 5 sur un substrat ; puis à traiter thermiquement le substrat revêtu à une température allant de 80 à 150° C par chauffage et séchage.

7. Substrat revêtu avec la composition de revêtement ignifugeant selon l'une quelconque des revendications 1 à 5.
